# EUROPEAN PATENT APPLICATION

(11) **EP 4 180 484 A1**
(43) Date of publication of application: **17.05.2023**
(21) Application number: 21838267.9
(22) Date of filing: 17.06.2021
(51) Int. Cl.: C08K 7/06, C08L 27/12, F16J 15/16, F16J 15/3284, C08K 3/04

(54) **FLUORORUBBER COMPOSITION**

(30) Priority: 07.07.2020 JP 2020116836
(71) Applicant: NOK Corporation, Minato-ku Tokyo 105-8585 (JP)
(72) Inventor: HIGUMA, Takahiro, Fujisawa-shi, Kanagawa 251-0042 (JP); MAEKAWA, Hirokazu, Aso-Shi, Kumamoto 869-2231 (JP)
(74) Representative: Gerauer, Marc Philippé
(86) International application number: PCT/JP2021/023024
(87) International publication number: WO 2022/009641

(57) **Abstract**

A fluororubber composition comprising 5 to 30 parts by weight of carbon black having an iodine adsorption of 70 mg/g or more, 5 to 20 parts by weight of carbon fiber having an average fiber diameter of 5 to 20 µm and an aspect ratio of 2 to 10, and 3 to 20 parts by weight of PTFE, based on 100 parts by weight of fluororubber. The crosslinked molded article obtained from the fluororubber composition exhibits excellent effects of imparting oil film retention by using carbon fiber with specific properties, and improving abrasion resistance in unlubricated conditions by using the carbon fiber in combination with PTFE as a solid lubricant.

## Description

### TECHNICAL FIELD

The present invention relates to a fluororubber composition. More particularly, the present invention relates to a fluororubber composition that is used as a molding material, such as a seal material for transmission.

### BACKGROUND ART

In recent years, there has been a strong demand for reducing the fuel consumption of vehicles against the background of the low-carbon society. Accordingly, with respect to vehicle transmission, demand on that for CVT (continuously variable transmission) vehicle tends to increase.

CVT is a type of continuously variable transmission comprising two pulleys and one belt. The pulley part is composed of a combination of a primary part (input side) and a secondary part (output side), which are connected to each other by a belt. By changing the width of the pulley, the contact radius between the pulley and the belt changes, and the turning radius of the belt changes, resulting in an infinitely variable speed change mechanism.

The pulley part rotates and reciprocates at a high speed when the speed changes due to the change in the width of the pulley part, and the seal used in the pulley part also rotates and reciprocates together. Therefore, the improvement of the seal performance can contribute to the improvement of fuel efficiency. Effects can be expected such as elimination of electric oil pump (reduction in unit weight), application of an idling stop mechanism and support of being towed.

Conventionally, seal rings have been the mainstream of the seals for such CVT pulley parts, and actuate the pulley and maintain hydraulic pressure. However, seal rings are not intended to prevent external leakage of fluid, but to maintain the pressure of fluid in the hydraulic circuit. Thus, their sealing properties were not sufficient, and an idling stop system could not be established with eliminating electric oil pumps in some cases.

On the other hand, squeeze packings, such as O rings and D rings, have been recently used to seal CVT pulley parts because they can ensure better sealing performance than seal rings. Compared with seal rings, squeeze packings have superior sealing properties and are single molded bodies, making them preferable seal members in terms of workability during assembly and product cost.

Thus, the improvement in sealing performance can be achieved easily and at low cost by using rubber squeeze packings. However, since the seal vibrates slightly with the belt rotation in CVT pulley parts, the rubber squeeze packings are easily worn in the environment. Rubber members used as squeeze packings are required to be excellent in abrasion resistance as well as sealing performance.

That is, seal parts of CVT pulleys have two seal parts, a primary part on the input side and a secondary part on the output side, and both the primary and secondary parts slightly vibrate with the belt rotation. Therefore, a high abrasion force is generated in the area where the seal member and the housing contact closely, so that the seal member is required to have abrasion resistance.

The present applicant has previously proposed a HNBR composition excellent in abrasion resistance and pressure resistance, comprising 3 to 20 parts by weight of carbon fiber or wollastonite as a hard filler, and 72 to 87 parts by weight of carbon black having an average particle diameter of 40 to 50 nm, an iodine adsorption of 35 to 49 g/kg, and a DBP oil absorption of 100 to 160 ml/100 g, based on 100 parts by weight of hydrogenated nitrile rubber (Patent Document 1).

On the other hand, in specifications for which heat resistance and chemical resistance are required, seal members made of fluororubber are generally applied. However, if carbon fiber is compounded with fluororubber in the same manner, because of its inferior substrate strength of fluororubber to hydrogenated nitrile rubber, the problem occurs that the abrasion resistance deteriorates in unlubricated conditions where the oil film is lost.

### PRIOR ART DOCUMENT

### PATENT DOCUMENT

Patent Document 1 : WO 2015/146862 A1

### OUTLINE OF THE INVENTION

### PROBLEM TO BE SOLVED BY THE INVENTION

An object of the present invention is to provide a fluororubber composition that can give a fluororubber crosslinked product having excellent abrasion resistance not only in lubricated conditions but also in unlubricated conditions.

### MEANS FOR SOLVING THE PROBLEM

The above object of the present invention can be achieved by a fluororubber composition comprising 5 to 30 parts by weight of carbon black having an iodine adsorption of 70 mg/g or more, 5 to 20 parts by weight of carbon fiber having an average fiber diameter of 5 to 20 µm and an aspect ratio of 2 to 10, and 3 to 20 parts by weight of polytetrafluoroethylene resin [PTFE], based on 100 parts by weight of fluororubber.

### EFFECT OF THE INVENTION

The crosslinked product obtained from the fluororubber composition according to the present invention exhibits excellent effects of imparting oil film retention by using carbon fiber with specific properties, and improving abrasion resistance in unlubricated conditions by using the carbon fiber in combination with PTFE as a solid lubricant.

### EMBODIMENTS FOR CARRYING OUT THE INVENTION

The fluororubber composition of the present invention comprises, based on 100 parts by weight of fluororubber, 5 to 30 parts by weight of carbon black and 5 to 20 parts by weight of carbon fiber, and 3 to 20 parts by weight of PTFE.

As the fluororubber, polyol-crosslinkable fluororubber or peroxide-crosslinkable fluororubber is preferably used. Further, polyol-crosslinkable fluororubber and peroxide-crosslinkable fluororubber can be used in combination.

As the fluororubber, a homopolymer or copolymer of one or two or more types of fluorine-containing olefins can be used.

Examples of the fluorine-containing olefin include vinylidene fluoride, hexafluoropropylene, pentafluoropropylene, trifluoroethylene, trifluorochloroethylene, tetrafluoroethylene, vinyl fluoride, perfluoroacrylic acid ester, perfluoroalkyl acrylate, perfluoromethyl vinyl ether, perfluoroethyl vinyl ether, perfluoropropyl vinyl ether, and the like. These fluorine-containing olefins can be used singly or in combination of two or more types.

Preferable examples of the fluororubber used in the present invention include vinylidene fluoride-hexafluoropropylene copolymer, vinylidene fluoridetetrafluoroethylene-hexafluoropropylene terpolymer, vinylidene fluoride-hexafluoropropylene-perfluoroalkyl vinyl ether terpolymer, and the like.

The introduction of an iodine and/or bromine group enabling peroxide crosslinking of the fluororubber can be carried out by a copolymerization reaction in the presence of an iodine and/or bromine group-containing saturated or unsaturated compound.

When a bromine and/or iodine group is contained as a side chain of a fluorine-containing copolymer, examples of such copolymer include copolymer of a crosslinking site-forming monomer such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether) and iodotrifluoroethylene.

When an iodine and/or bromine group is contained as a terminal group of a fluorine-containing copolymer, a fluoroalkyl or alkylene compound halogenated at both ends represented by the general formula: X₁CₙF₂ₙX₂ (X₁: F, Br, or I; X₂: Br or I; and n: 1 to 12) is used. In terms of the balance of reactivity and handling, copolymers containing an iodine and/or bromine group, derived from 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, and 1-iodoperfluorohexane, whose n is 1 to 6, are preferably used.

Moreover, when X₁ and X₂ are made to be I and/or Br, a crosslinking site can be introduced into the terminal position of a fluorine-containing copolymer. Examples of such a compound include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, 1,6-diiodoperfluorohexane, and the like. These compounds can also be used as a chain transfer agent.

The copolymer can be obtained by solution polymerization method, suspension polymerization method, emulsion polymerization method and the like, and are also commercially available (e.g., "GBL-600S", "GLT-600S", "Viton A-500" and "Viton B-600" produced by DuPont, and "DAIEL-G801", "G7401" produced by Daikin Industries, Ltd.).

The carbon black used herein has an iodine adsorption of about 70 mg/g or more, preferably about 70 to 150 mg/g, more preferably about 70 to 100 mg/g, and a DBP oil absorption of about 70 to 150 cm³/100 g, more preferably about 80 to 120 cm³/100 g. If other carbon black is used, the desired strength or abrasion resistance in lubricated conditions cannot be achieved.

The carbon black is used at a ratio of about 5 to 30 parts by weight, preferably about 10 to 25 parts by weight, based on 100 parts by weight of the polymer. If the carbon black is used at a ratio less than this range, the material strength of the crosslinked product, and abrasion resistance in lubricated conditions and in unlubricated conditions deteriorate. In contrast, if the carbon black is used at a ratio larger than this range, the elongation of the crosslinked product is reduced. Carbon black other than the above can be used in combination as long as the object of the present invention is not impaired after adding the carbon black in the above amount.

As the carbon fiber, general pitch-based, PAN-based carbon fiber having an average fiber diameter of about 5 to 20 µm, preferably about 5 to 15 µm, an average fiber length of about 10 to 200 µm, preferably about 20 to 100 µm, and an aspect ratio of 2 to 10, preferably 2 to 8, are used. If other carbon fiber is used, abrasion resistance in unlubricated conditions cannot be ensured. That is, carbon nanotubes or the like are not included.

The carbon fiber is used at a ratio of about 5 to 20 parts by weight, preferably 5 to 15 parts by weight, based on 100 parts by weight of fluororubber. If the carbon fiber is used at a ratio less than this range, the abrasion resistance of the crosslinked product in lubricated conditions is reduced. In contrast, if the carbon fiber is used at a ratio larger than this range, material strength deteriorates, and abrasion resistance in unlubricated conditions cannot be ensured.

As PTFE, a granular material having an average particle diameter of about 1 to 20 µm, preferably about 1 to 15 µm, is used at a ratio of about 3 to 20 parts by weight, preferably about 5 to 15 parts by weight, based on 100 parts by weight of fluororubber. If PTFE is used at a ratio less than this range, the abrasion resistance of the crosslinked product in unlubricated conditions cannot be improved. In contrast, if PTFE is used at a ratio larger than this range, the strength of the crosslinked product cannot be ensured.

Further, in addition to the above components, it is possible to add compounding agents, which are fillers or reinforcing agents other than carbon black, such as silica; processing aids, such as wax, metal soap, and carnauba wax; acid acceptors, such as calcium hydroxide, magnesium oxide, zinc oxide, and hydrotalcite; anti-aging agents; and thermoplastic resins.

For the step of dispersing each compounding component in fluororubber, an open roll method, a closed kneading method, or a multi-screw extrusion kneading method can be used. Further, a kneader can also be used. In this case, kneading is carried out at about 100 to 200°C, preferably about 140 to 180°C.

The mixed materials can be mixed with a crosslinking agent, followed by crosslinked molding, thereby producing a fluororubber crosslinked molded article. As the crosslinking agent, a polyol-based crosslinking agent or an organic peroxide crosslinking agent is used.

Bisphenols are preferable as the polyol-based crosslinking agent. Specific examples of bisphenol include polyhydroxy aromatic compound such as 2,2-bis(4-hydroxyphenyl)propane [bisphenol A], 2,2-bis(4-hydroxyphenyl)perfluoropropane [bisphenol AF], bis(4-hydroxyphenyl) sulfone [bisphenol S], bisphenol A-bis(diphenyl phosphate), 4,4'-dihydroxydiphenyl, 4,4'-dihydroxydiphenylmethane, 2,2-bis(4-hydroxyphenyl)butane, and the like. Bisphenol A, bisphenol AF, and the like are preferably used. These may be in the form of alkali metal salts or alkaline earth metal salts. The polyol-based crosslinking agent is used at a ratio of about 1 to 10 parts by weight based on 100 parts by weight of fluororubber.

Further, a commercially available masterbatch containing a raw material rubber and a crosslinking agent may be used as the polyol-based crosslinking agent. These crosslinking agents may be used singly or in combination of two or more types.

A crosslinking accelerator can be used in the production of a crosslinked fluororubber. As the crosslinking accelerator, for example, a quaternary phosphonium salt can be used.

Specific examples of the quaternary phosphonium salt include tetraphenylphosphonium chloride, triphenylbenzylphosphonium chloride, triphenylbenzylphosphonium bromide, triphenylmethoxymethylphosphonium chloride, triphenylmethycarbonylmethyphosphonium chloride, triphenylethoxycarbonylmethylphosphonium chloride, trioctylbenzylphosphonium chloride, trioctylmethylphosphonium bromide, trioctylethylphosphonium acetate, tetraoctylphosphonium chloride, cetyldimethylbenzylphosphonium chloride, etc. The polyol-based crosslinking agent is used at a ratio of about 0.1 to 5 parts by weight based on 100 parts by weight of the fluororubber.

As the crosslinking accelerator, a commercially available masterbatch containing a raw material rubber and a crosslinking accelerator may be used. Further, these crosslinking agents may be used singly or in combination of two or more types.

As the crosslinking accelerator, a quaternary ammonium salt can be used singly or in combination with the quaternary phosphonium salt mentioned above. Examples of the quaternary ammonium salt include 5-benzyl-1,5-diazabicyclo[4.3.0]-5-nonenium tetrafluoroborate or 5-benzyl-1,5-diazabicyclo[4.3.0]-5-nonenium hexafluorophosphate, etc.

The tetrafluoroborate or hexafluorophosphate has a melting point of about 80°C or 100°C, respectively, and is easily melted during heat kneading (about 100°C) using a roll, a kneader, a Banbury mixer, or the like. Thus, they are excellent in dispersibility.

A commercially available masterbatch containing a raw material fluororubber and quaternary ammonium salt may be used as the quaternary ammonium salt. Further, these crosslinking accelerators may be used singly or in combination of two or more types.

Examples of the organic peroxide-based crosslinking agent include 2,5-dimethylhexane-2,5-dihydro peroxide, 2,5-dimethyl-2,5-di(benzoylperoxy)hexane, tert-butyl peroxide, dicumyl peroxide, tert-butyl cumyl peroxide, 1,1-di(tert-butylperoxy)-3,3,5-trimethylcyclohexane, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, tert-butyl peroxybenzoate, tert-butylperoxy isopropylcarbonate, n-butyl-4,4-di(tert-butylperoxy)valerate, and the like. For them, commercially available products (such as Perhexa 25B-40 produced by NOF Corporation) can be used as they are. The organic peroxide-based crosslinking agent is used at a ratio of about 1 to 10 parts by weight based on 100 parts by weight of the fluororubber.

Further, as the peroxide cross-linking agent, a commercially available masterbatch containing a raw material rubber and a crosslinking agent may be used. These crosslinking agents may be used singly or in combination of two or more types.

As the crosslinking accelerator (aid) that can be used in the peroxide-based crosslinking system, triallyl isocyanurate, triallyl cyanurate, trimethylolpropane trimethacrylate or the like is used.

The fluororubber composition, which is a kneaded mixture product of these components, is, for example, vulcanized under pressure and heating to form a crosslinked molded article. Specifically, the obtained fluororubber composition is heated generally at a temperature of about 140 to 230°C for about 1 to 120 minutes (primary vulcanization) using an injection molding machine, a compression molding machine, a vulcanizing press machine, an oven, or the like, thereby obtaining a fluororubber crosslinked molded article. Further, if necessary, secondary vulcanization is carried out, for example, by performing heat treatment in an oven in a temperature range of about 200 to 300°C for about 1 to 20 hours.

The obtained crosslinked molded article is effectively used, for example, as a seal member for vehicle transmission, particularly for CVT pulley.

### EXAMPLES

The following describes the present invention with reference to Examples.

### Example 1

| | |
|---|---|
| Fluororubber (G7401 produced by Daikin Industries, Ltd.; polyol crosslinking agent-containing product) | 100 parts by weight |
| Carbon black (Seast 3 produced by Tokai Carbon Co., Ltd.; iodine adsorption: 80 mg/g; DBP oil absorption: 101 cm³/100 g) | 15 parts by weight |
| Carbon fiber (Donacarbo Milled S-2404N produced by | 10 parts by weight |
| Osaka Gas Chemicals Co., Ltd.; average fiber diameter: 13 µm, average fiber length: 40 µm, aspect ratio: 3) | |
| PTFE (RubronL-5 produced by Daikin Industries, Ltd.; average particle diameter: 5µm) | 10 parts by weight |
| Calcium hydroxide (Caldic#1000 produced by Ohmi Chemical Industry Co., Ltd.) | 6 parts by weight |
| Magnesium oxide (Kyowamag 150 produced by Kyowa Chemical Industry Co., Ltd.) | 3 parts by weight |

Each of the above components was kneaded with a kneader and an open roll, and the kneaded product was vulcanized with a vulcanizing press machine at 170°C for 15 minutes, thereby obtaining a test piece with a length of 150 mm, a width of 100 mm, and a thickness of 2 mm.

### Example 2

In Example 1, the amount of carbon black was changed to 10 parts by weight.

### Example 3

In Example 1, the amount of carbon black was changed to 25 parts by weight.

### Example 4

In Example 1, the amount of carbon fiber was changed to 15 parts by weight.

### Example 5

In Example 1, the amount of PTFE was changed to 20 parts by weight.

### Comparative Example 1

In Example 1, the same amount (15 parts by weight) of Seast SO (produced by Tokai Carbon Co., Ltd.; iodine adsorption: 44 mg/g; DBP oil absorption: 115 cm³/100 g) was used as carbon black.

### Comparative Example 2

In Example 1, the same amount (10 parts by weight) of Donacarbo Milled S-241 produced by Osaka Gas Chemicals Co., Ltd. (average fiber diameter: 13 µm, average fiber length: 140 µm, aspect ratio: 11) was used as carbon fiber.

### Comparative Example 3

In Example 1, the carbon fiber and PTFE were not used.

### Comparative Example 4

In Example 1, the PTFE was not used.

### Comparative Example 5

In Example 1, the carbon fiber was not used.

### Comparative Example 6

In Example 1, the amount of carbon black was changed to 35 parts by weight.

### Comparative Example 7

In Example 1, the amount of carbon fiber was changed to 25 parts by weight.

### Comparative Example 8

In Example 1, the amount of PTFE was changed to 25 parts by weight.

The fluororubber crosslinked molded articles obtained in each of the above Examples and Comparative Examples were measured for normal state physical properties and evaluated for abrasion resistance (lubrication and non-lubrication).

Normal state physical properties: According to JIS K6253 corresponding to ISO 18517and K6251 corresponding to ISO 37, hardness [Hs], rupture strength [Tb], and elongation at break [Eb] were measured.

For the rupture strength (unit: MPa), more than 15.0 was evaluated as ⊚, 10.0 to 15.0 was evaluated as ○, and less than 10.0 was evaluated as ×. For the elongation at break (unit: %), more than 200 was evaluated as ⊚, 100 to 200 was evaluated as ○,-and less than 100 was evaluated as ×.

### Abrasion resistance (lubrication): a micro sliding durability test

A micro sliding durability test was carried out under the following conditions on a D ring DRO (inner diameter: 121 x outer diameter: 129.2 x thickness: 2.3 (mm) product shape), and the appearance of the sliding surface was visually determined.
temperature: 120°C
pressure: 2.8 MPa
sliding distance: 0.3 mm
frequency :30 Hz
oil: CVTF
durability time: 100 hours
squeeze (center): 0.42 mm

Abrasion to the extent that the surface became cloudy was evaluated as ○, abrasion with an uneven surface was evaluated as △, and mirror surface abrasion (P.L disappearance) was evaluated as × .

Abrasion resistance (non-lubrication): According to JIS K6264-2 corresponding to ISO 4649, a Taber abrasion test
temperature: 25°C
applied force: 9.8 N
rotational speed: 60 rpm
testing rotating speed: 1,000 rotations

An abrasion amount of less than 50 mg was evaluated as ⊚, an abrasion amount of 50 to 100 mg was evaluated as ○, an abrasion amount of 100 to 150 mg was evaluated as △, and an abrasion amount of larger than 150 mg was evaluated as × .

Following table shows the results obtained.

**Table**

| Measurement item | Ex. 1 | Ex. 2 | Ex. 3 | Ex. 4 | Ex. 5 | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|---|---|---|---|
| [Normal state physical properties] | | | | | | | | | | | | | |
| Hs | 88 | 84 | 94 | 90 | 89 | 87 | 88 | 85 | 88 | 85 | 97 | 93 | 90 |
| Tb | 13.0 | 10.5 | 16.8 | 12.0 | 10.5 | 9.6 | 12.0 | 18.4 | 16.4 | 16.2 | 16.9 | 9.4 | 9.1 |
| Evaluation | ○ | ○ | ⊚ | ○ | ○ | × | ○ | ⊚ | ⊚ | ⊚ | ⊚ | × | × |
| Eb | 160 | 180 | 110 | 130 | 150 | 160 | 150 | 220 | 150 | 220 | 50 | 60 | 140 |
| Evaluation | ○ | ○ | ○ | ○ | ○ | ○ | ○ | ⊚ | ○ | ⊚ | × | × | ○ |

| [Abrasion resistance] | | | | | | | | | | | | | |
|---|---|---|---|---|---|---|---|---|---|---|---|---|---|
| Lubrication Evaluation | ○ | ○ | ○ | ○ | ○ | Δ | ○ | Δ | ○ | Δ | ○ | ○ | ○ |
| Non-lubrication (abrasion amount) | 58 | 62 | 72 | 77 | 51 | 71 | 102 | 203 | 234 | 43 | 72 | 116 | 66 |
| Evaluation | ○ | ○ | ○ | ○ | ○ | ○ | Δ | × | × | ⊚ | ○ | Δ | ○ |

## Claims

1. A fluororubber composition comprising 5 to 30 parts by weight of carbon black having an iodine adsorption of 70 mg/g or more, 5 to 20 parts by weight of carbon fiber having an average fiber diameter of 5 to 20 µm and an aspect ratio of 2 to 10, and 3 to 20 parts by weight of polytetrafluoroethylene resin, based on 100 parts by weight of fluororubber.

2. The fluororubber composition according to claim 1, wherein carbon black having an iodine adsorption of 70 to 150 mg/g and a DBP oil absorption of 70 to 150 cm³/100 g is used.

3. The fluororubber composition according to claim 2, wherein carbon black having an iodine adsorption of 70 to 100 mg/g and a DBP oil absorption of 80 to 120 cm³/100 g is used.

4. The fluororubber composition according to claim 1, wherein the carbon black is used in an amount of 10 to 25 parts by weight.

5. The fluororubber composition according to claim 1, wherein carbon fiber having an aspect ratio of 2 to 8 is used.

6. The fluororubber composition according to claim 1, wherein granular polytetrafluoroethylene resin is used as the polytetrafluoroethylene resin.

7. A crosslinked molded article obtained by crosslinking the fluororubber composition according to claim 1.

8. The crosslinked molded article according to claim 7, which is used as a sealing material.

9. The sealing material according to claim 8, which is used as a squeeze packing.

10. The sealing material according to claim 9, which is used for transmission.

11. The sealing material according to claim 10, which is used for continuously variable vehicle pulley part transmission.
